Europäisches Patentamt

European Patent Office

Office européen des brevets

(11) Numéro de publication: **0 126 002**
**B1**

(12) **FASCICULE DE BREVET EUROPEEN**

(45) Date de publication du fascicule du brevet: **07.10.87**

(51) Int. Cl.⁴: **G 02 B 27/02**

(21) Numéro de dépôt: **84400962.1**

(22) Date de dépôt: **11.05.84**

(54) **Appareil d'observation.**

(30) Priorité: **11.05.83 FR 8307936**

(43) Date de publication de la demande:
**21.11.84 Bulletin 84/47**

(45) Mention de la délivrance du brevet:
**07.10.87 Bulletin 87/41**

(84) Etats contractants désignés:
**AT BE CH DE FR GB IT LI LU NL SE**

(56) Documents cités:
**FR-A- 551 921**
**FR-A-2 077 281**
**FR-A-2 109 039**
**GB-A-2 100 461**

(73) Titulaire: **SOCIETE D'OPTIQUE, PRECISION
ELECTRONIQUE ET MECANIQUE - SOPELEM
102 rue Chaptal
F-92300 Levallois-Perret (FR)**

(72) Inventeur: **Baluteau, Jean-Michel
77 allée de Chartres
F-93190 Livry-Gargan (FR)**
Inventeur: **Saint-Sevin, Michel
1bis rue des 3 Soeurs
F-93220 Gagny (FR)**
Inventeur: **Chabanier, Patrick
9 rue du Midi
F-94300 Vincennes (FR)**

(74) Mandataire: **Phélip, Bruno et al
c/o Cabinet Harlé & Phélip 21, rue de la
Rochefoucauld
F-75009 Paris (FR)**

Courier Press, Leamington Spa, England.

## Description

La présente invention se rapporte à un appareil d'observation permettant de viser alternativement suivant an moins deux directions.

Cet appareil s'applique notamment à un dispositif visiophonique dans lequel on veut viser, avec une caméra, soit une personne soit un document posé devant ladite personne de manière à pouvoir être lu normalement par cette personne.

Lorsqu'on veut viser alternativement, avec un instrument tel qu'une caméra, deux objets, par exemple une personne et un document devant être lu normalement par cette personne, on peut, pour conserver la bonne orientation des images, faire subir deux mouvements différents à la caméra. Cette solution est toutefois compliquée et onéreuse.

La présente invention a pour but de fournir un appareil pourvu d'un instrument de prise de vues ou d'observation maintenu immobile et permettant de viser alternativement deux objets appartenant à deux plans sécants en donnant deux images orientées dans le même sens de telle manière qu'il n'est pas nécessaire de faire tourner une image par rapport à l'autre. Ce dispositif est simple et peu onéreux.

L'invention a donc pour objet un appareil d'observation comportant un objectif et destiné à viser alternativement deux objets placés dans deux plans sécants, caractérisé par le fait qu'il comporte, devant l'objectif, un réflecteur comportant une seule surface de réflexion plane et susceptible de pivoter autour de l'axe optique de l'objectif, cet axe étant positionné sensiblement dans le plan bissecteur ou un plan parallèle au plan bissecteur du dièdre formé par les deux plans objets en faisant un angle déterminé avec l'arête du dièdre, α désignant l'angle du dièdre, tandis que l'angle formé par l'axe optique et une droite du plan bissecteur normale à l'arête, est sensiblement égale à

$$\frac{\pi - \alpha}{2}$$

et l'angle d'incidence i de l'axe optique avec la surface réfléchissante du réflecteur est sensiblement défini par la relation

$$\cos 2i = \pm \sin^2 \frac{\alpha}{2}.$$

Selon une autre caractéristique, l'appareil comporte des moyens pour tourner le réflecteur entre deux positions d'observation telles que l'angle γ de rotation du réflecteur de l'une à l'autre soit sensiblement défini par

$$tg\frac{\gamma}{2} = \frac{1}{\sin\frac{\alpha}{2}}$$

L'invention va maintenant être décrite avec plus de détails en se référant à un mode de réalisation donné à titre d'exemple et représenté par les dessins annexés sur lesquels:

La figure 1 est un schéma du dispositif selon l'invention.

La figure 2 est un schéma montrant les différentes positions relatives possibles de l'axe optique de l'objectif par rapport aux objets visés.

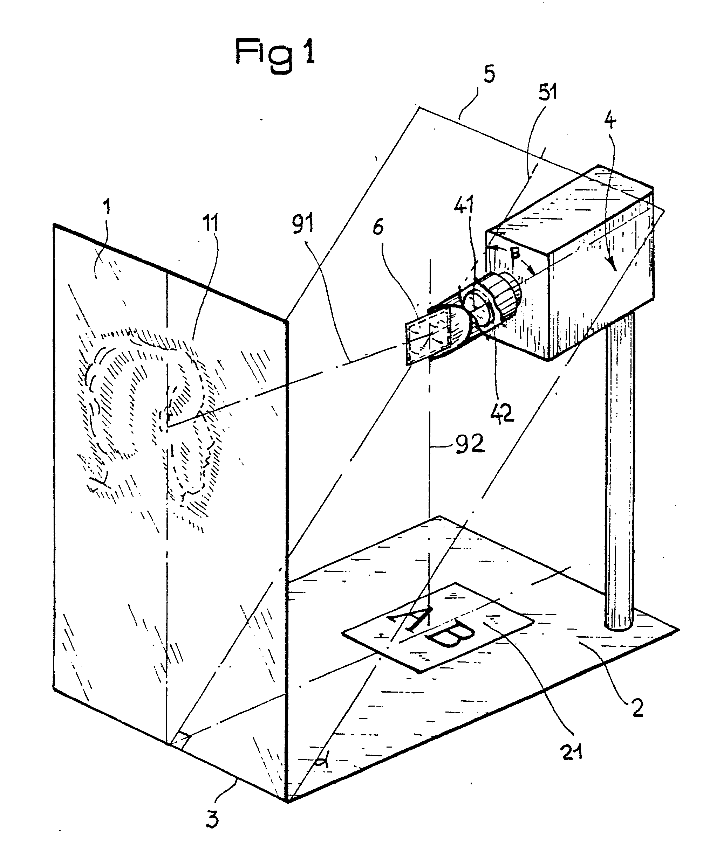

L'appareil représenté par la figure 1 permet de viser deux objets 11 et 21. Il comprend un instrument 4 d'observation (ou de prise de vues) proprement dit et un réflecteur 6 (prisme ou miroir) placé devant l'objectif et susceptible de tourner autour de l'axe 41 de celui-ci. Le réflecteur 6 est monté sur l'instrument 4 par l'intermédiaire d'un mécanisme qui assure le guidage en rotation. L'instrument 4 est tenu en position fixe par un support.

On considèrera que les deux objets 11 et 21 sont contenus respectivement dans des demi-plans fictifs 1 et 2 qui se coupent selon une arête 3, l'angle dièdre étant désigné α.

Les directions homologues de ces objets sont repérées pour les couples d'axes Ox, Oy pour 11 et O'x', O'y' pour 21. Ox et O'x' sont parallèles et de sens opposés et on passe de Oy à O'y' par une rotation autour de 3.

Dans le cas d'un dispositif visiophonique, un sujet sera une personne et l'autre sujet sera un document posé à l'endroit devant elle de manière à permettre la lecture normale. Le plan 1 est vertical, le plan 2 supportant le document étant horizontal ou légèrement incliné.

La surface réfléchissante du réflecteur 6 qui est centrée sur l'axe optique 41 fait un angle constant avec celui-ci. L'angle d'incidence i formé par l'axe optique 41 et la normale à la surface réfléchissante du miroir est sensiblement défini par la relation

$$\cos 2i = \pm \sin^2 \frac{\alpha}{2}.$$

L'objectif et le réflecteur sont positionnés de manière que l'axe optique 41 compris entre ce réflecteur et cet objectif soit situé dans le plan bissecteur 5 du dièdre formé par les deux plans objets 1 et 2 et forme avec une droite 51 du plan bissecteur normale à l'arête 3 un angle β égal à

$$\frac{\pi - \alpha}{2}.$$

Pour passer de l'observation du sujet 11 au sujet 21 le réflecteur 6 tourne d'un angle de rotation γ défini par la relation

$$tg\frac{\gamma}{2}=\frac{1}{\sin\dfrac{\alpha}{2}}.$$

Le mouvement de rotation d'une position d'observation à l'autre peut être commandé de manière automatique.

Les objets 11 et 21 sont placés de manière que les normales 91 et 92 au centre concourent sensiblement au même point sur la surface réfléchissante de réflecteur.

Dans le cas où les distances 91 et 92 entre le réflecteur 6 et les objets sont différentes, la rotation du réflecteur est couplée à la mise au point de l'objectif. Dans ce cas, l'axe optique de l'objectif n'est plus dans le plan bissecteur mais dans un plan parallèle au plan bissecteur.

Dans la cas où les plans objets 1 et 2 sont à 90° l'un de l'autre, l'angle β formé entre l'axe optique 41 et la droite 51 est égal à π/4 et l'angle d'incidence i de l'axe optique 41 sur le réflecteur est égal à 60° ou à 30°. L'angle γ dont doit tourner le réflecteur entre les deux positions d'observation est alors égal à 109°, 47.

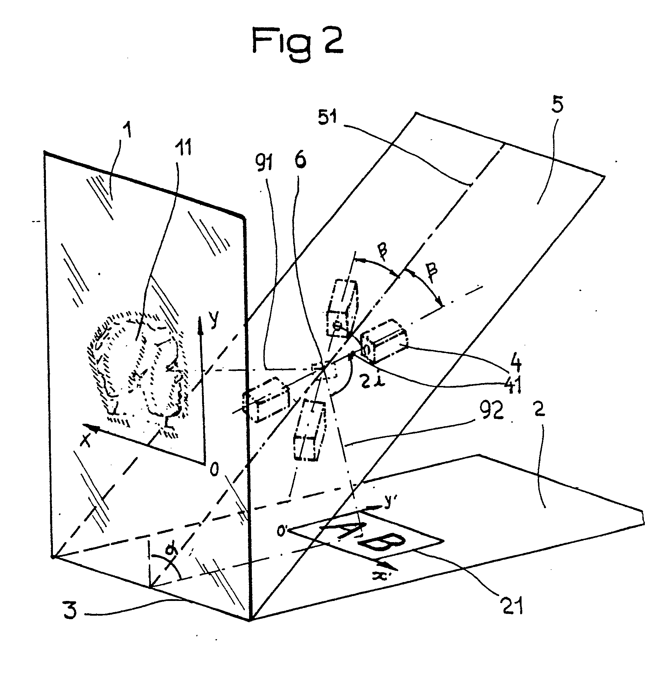

En se référant à la figure 2, on note que l'axe optique supposé orienté peut occuper l'une des quatre positions représentées sur cette figure qui sont symétriques, deux à deux, par rapport à la droite 51 en faisant toujours avec ladite droite 51 l'angle β défini ci-dessus.

L'angle d'incidence i de l'axe optique sur le réflecteur est déterminé par la direction de l'axe de visée. Pour deux positions symétriques par rapport à 51, l'angle d'incidence est le même, cet angle changeant lorsqu'on inverse la direction de visée.

Dans le cas où l'instrument 4 est une caméra et où il n'y a qu'une seule réflexion due au réflecteur 6, les images fournies par la caméra sont renversées par rapport à la prise de vues normale. Le sens de balayage du tube de la caméra doit alors être inversé pour obtenir des images correctement redressées.

En vertu du principe du retour inverse de la lumière, l'appareil pourrait être utilisé pour, à partir d'un cliché unique, obtenir deux projections différentes.

L'appareil permet de passer d'un premier sujet à un second sujet disposés de manière quelconques en orientant les images de manière déterminée. On peut généralement trouver une direction d'axe de la caméra, un angle d'incidence et un angle de rotation du miroir convenables.

## Revendications

1. Appareil d'observation comportant un objectif (42) et destiné à viser alternativement deux objets (11, 21) placés dans deux plans sécants (1, 2), caractérisé par le fait qu'il comporte, devant l'objectif (42), un réflecteur (6) comportant une seule surface de réflexion plane et susceptible de pivoter autour de l'axe optique (41) de l'objectif, cet axe étant positionné sensiblement dans le plan bissecteur (5) ou un plan parallèle au plan bissecteur du dièdre formé par les deux plans objets (1, 2) en faisant un angle déterminé avec l'arête (3) du dièdre, α désignant l'angle du dièdre, tandis que l'angle formé par l'axe optique (41) et une droite (51) du plan bissecteur normale à l'arête (3), fait sensiblement égal à

$$\frac{\pi-\alpha}{2},$$

et l'angle d'incidence i de l'axe optique (41) avec la surface réfléchissante du réflecteur (6) est sensiblement défini par la relation

$$\cos 2i=\pm\sin^2\frac{\alpha}{2}.$$

2. Appareil selon la revendication 1 caractérisé par le fait qu'il comporte des moyens pour tourner le réflecteur (6) entre deux positions d'observation telles que l'angle de rotation γ du réflecteur de l'une à l'autre soit sensiblement défini par la relation

$$tg\frac{\gamma}{2}=\frac{1}{\sin\dfrac{\alpha}{2}}.$$

3. Appareil selon l'une quelconque des revendications 1 et 2 caractérisé par le fait qu'il est monté dans un dispositif visiophonique, comportant une caméra dotée dudit objectif.

## Patentansprüche

1. Beobachtungsapparat, der ein Objektiv (42) aufweist und zum alternativen Sehen von zwei Objekten (11, 21) bestimmt ist, die in zwei sich schneidenden Ebenen (1, 2) plaziert sind dadurch gekennzeichnet, daß er vor dem Objektiv (42) einen Reflektor (6) aufweist, der eine einzige ebene Reflexionsfläche hat und um die optische Achse (41) des Objektives drehbar ist, daß diese Achse im wesentlichen in der halbierenden Ebene (5) oder in einer Ebene positioniert ist, die parallel zu der halbierenden Ebene des V liegt, das durch die beiden Objekt ebenen (1, 2) gebildet ist, die an der Kante (3) des V einen Winkel bestimmen, daß mit (α) der Winkel des V bezeichnet ist, während der Winkel, der durch die optische Achse (41) und einer Geraden (51) der halbierenden Ebene, die normal zu der Kante (3) verläuft, im wesentlichen gleich dem Ausdruck (π−α)/2 ist und daß der Einfallwinkel (i) der optischen Achse (41) mit der reflektierenden Fläche des Reflektors (6) im wesentlichen durch die Beziehung

$$\cos 2i = \pm \sin^2 \frac{\alpha}{2}$$

definiert ist.

2. Apparat nach Anspruch 1, V dadurch gekennzeichnet daß er Mittel zum Drehen des Reflektors (6) zwischen zwei Beobachtungspositionen aufweist, derart, daß der Drehwinkel γ des Reflektors von der einen zu der anderen Position im wesentlichen durch die Beziehung

$$tg\ \gamma/2 = 1/\sin \frac{\alpha}{2}$$

definiert ist.

3. Apparat nach einem der Ansprüche 1 und 2, V dadurch gekennzeichnet- daß er an einer visiophonischen Vorrichtung montiert ist, die eine Kamera trägt, die mit dem genannten Objekt ausgestattet ist.

**Claims**

1. Observation apparatus comprising an objective (42) and intended to view alternately two objects (11, 21) placed in two secant planes (1, 2), characterized in that it comprises, in front of the objective (42), a reflector (6) comprising a single plane reflecting surface and capable of pivoting about the optical axis (41) of the objective, this axis being positioned substantially in the bisecting plane (5) or a plane parallel to the bisecting plane of the dihedral formed by the two object planes (1, 2) making a specified angle with the edge (3) of the dihedral, α designating the angle of the dihedral, while the angle formed by the optical axis (41) and a straight line (51) of the bisecting plane normal to the edge (3) is made substantially equal to

$$\frac{\pi - \alpha}{2},$$

and the angle of incidence i of the optical axis (41) with the reflecting surface of the reflector (6) is substantially defined by the relation

$$\cos 2i = \pm \sin^2 \frac{\alpha}{2}.$$

2. Apparatus according to claim 1, characterized in that it comprises means for turning the reflector (6) between two positions of observation which are such that the angle of rotation γ of the reflector from one to the other is substantially defined by the relation

$$tg\ \frac{\gamma}{2} = \frac{1}{\sin \frac{\alpha}{2}}$$

3. Apparatus according to either one of claims 1 and 2, characterized in that it is mounted in a videophone device, which comprises a camera equipped with the said objective.

# Fig 1

# Fig 2